(19) Europäisches Patentamt
European Patent Office
Office européen des brevets

(11) **EP 2 384 528 B1**

(12) **EUROPÄISCHE PATENTSCHRIFT**

(45) Veröffentlichungstag und Bekanntmachung des Hinweises auf die Patenterteilung:
**08.04.2020 Patentblatt 2020/15**

(21) Anmeldenummer: **10700552.2**

(22) Anmeldetag: **15.01.2010**

(51) Int Cl.:
*H02J 3/18* (2006.01)    *H02M 7/49* (2007.01)

(86) Internationale Anmeldenummer:
**PCT/EP2010/050465**

(87) Internationale Veröffentlichungsnummer:
**WO 2010/086239 (05.08.2010 Gazette 2010/31)**

(54) **VERFAHREN ZUM BALANCIEREN DER ZWISCHENKREISSPANNUNGEN IN EINEM SELBSTGEFÜHRTEN MULTILEVEL-BLINDSTROMKOMPENSATOR UND SELBSTGEFÜHRTER MULTILEVEL-BLINDSTROMKOMPENSATOR**

METHOD FOR BALANCING THE INTERMEDIATE CIRCUIT VOLTAGES IN A SELF-GUIDED, MULTI-LEVEL REACTIVE CURRENT COMPENSATOR AND SELF-GUIDED, MULTI-LEVEL REACTIVE CURRENT COMPENSATOR

PROCÉDÉ POUR ÉQUILIBRER LES TENSIONS DE CIRCUIT INTERMÉDIAIRE DANS UN COMPENSATEUR À COURANT RÉACTIF MULTINIVEAU AUTOPILOTÉ ET COMPENSATEUR À COURANT RÉACTIF MULTINIVEAU AUTOPILOTÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.01.2009 DE 102009007476**

(43) Veröffentlichungstag der Anmeldung:
**09.11.2011 Patentblatt 2011/45**

(73) Patentinhaber: **Siemens Aktiengesellschaft 80333 München (DE)**

(72) Erfinder:
• **MÜNCH, Philipp**
  **67663 Kaiserslautern (DE)**
• **TUTTAS, Christian**
  **67663 Kaiserslautern (DE)**

(56) Entgegenhaltungen:
GB-A- 2 285 523    US-A- 5 642 275
US-A- 6 075 350    US-A1- 2009 102 436

• **FANG ZHENG PENG ET AL: "A Multilevel Voltage-Source Inverter with Separate DC Sources for Static Var Generation" IEEE TRANSACTIONS ON INDUSTRY APPLICATIONS, IEEE SERVICE CENTER, PISCATAWAY, NJ, US, Bd. 32, Nr. 5, 1. Oktober 1996 (1996-10-01), XP011022083 ISSN: 0093-9994**
• **CHOI N S ET AL: "Modeling and analysis of a static VAR compensator using multilevel voltage source inverter" INDUSTRY APPLICATIONS SOCIETY ANNUAL MEETING, 1993., CONFERENCE RECORD OF THE 1993 IEEE TORONTO, ONT., CANADA 2-8 OCT. 1993, NEW YORK, NY, USA,IEEE, US LNKD- DOI:10.1109/IAS.1993.299006, 2. Oktober 1993 (1993-10-02), Seiten 901-908, XP010118794 ISBN: 978-0-7803-1462-7**
• **HOCHGRAF C ET AL: "Comparison of multilevel inverters for static VAr compensation" INDUSTRY APPLICATIONS SOCIETY ANNUAL MEETING, 1994., CONFERENCE RECORD OF THE 1994 IEEE DENVER, CO, USA 2-6 OCT. 1994, NEW YORK, NY, USA,IEEE LNKD- DOI:10.1109/IAS.1994.377528, 2. Oktober 1994 (1994-10-02), Seiten 921-928, XP010124122 ISBN: 978-0-7803-1993-6**

**EP 2 384 528 B1**

**Beschreibung**

Beispielsweise aus einem Aufsatz von Su Chen und Geza Joós "A Transformerless STATCOM Based on Cascaded Multilevel Inverters with Low Switching Frequency Space Vectors PWM" in EPE 2001 - Graz ist ein selbstgeführter Multilevel-Blindstromkompensator bekannt, der mittels kaskadierten Vierquadrantenstellern aufgebaut ist. Ein solcher selbstgeführter Multilevel-Blindstromkompensator kann direkt ohne einen Transformator an ein Mittel- oder Hochspannungsenergieversorgungsnetz angeschlossen werden.

Aus der US 5 642 275 A und dem Beitrag von Fang Zheng Peng et al. "A Multilevel Voltage-Source Inverter with Separate DC-Sources for Static Var Generation", IEEE 1996, ist ein Verfahren zur Balancierung der Kondensatorspannungen eines modularen Mehrstufenumrichters bekannt, bei dem die Umschaltmuster für einzelne Schaltmodule des Mehrstufenumrichters leicht gegeneinander phasenverschoben werden.

Der Erfindung liegt die Aufgabe zugrunde, einen selbstgeführten Multilevel-Blindstromkompensator auf relativ einfache und zuverlässige Weise stabil an einem Netz betreiben zu können.

Die Aufgabe wird erfindungsgemäß durch ein Verfahren mit den Merkmalen des Patentanspruchs 1 gelöst. Es ist demnach ein Verfahren zum Balancieren der Zwischenkreisspannungen in einem selbstgeführten Multilevel-Blindstromkompensator mit mehreren in Reihe geschalteten Mehrquadrantenstellern bereitgestellt, bei dem jeder Mehrquadrantensteller eine pulsweitenmodulierte Spannung aufzubringen hat, die sich aus einem gleichen Teil der den Blindstrom einprägenden Kompensatorspannung und einer zusätzlichen netzfrequenten Balancierungsspannung mit wählbarer Amplitude zusammensetzt, wobei die Summe aller Balancierungsspannungen null ist und jede Balancierungsspannung in Phase oder Gegenphase zur Grundschwingung des Blindstromes liegt, abhängig davon, ob die gemessene Zwischenkreisspannung des Mehrquadrantenstellers kleiner oder größer ist als eine aus den Zwischenkreisspannungen gebildete Referenzgröße.

Der wesentliche Vorteil des erfindungsgemäßen Verfahrens besteht darin, dass mit ihm ein selbstgeführter Multilevel-Blindstromkompensator wegen der Verwendung von Balancierungsspannungen dauerhaft stabil an einem Energieversorgungsnetz betrieben werden kann, weil ein Wegdriften der Zwischenkreisspannungen nach oben und unten vermieden wird. Zu hohe Zwischenkreisspannungen gefährden nämlich die üblicherweise eingesetzten Halbleiterschalter, während zu niedrige Zwischenkreisspannungen den Stellbereich der Mehrquadrantensteller einschränken.

Werden bei dem erfindungsgemäßen Verfahren als Mehrquadrantensteller Vierquadrantensteller verwendet, dann hat in vorteilhafter Weise jeder Vierquadrantensteller eine pulsweitenmodulierte Spannung aufzubringen, die sich aus einem gleichen Teil der Kompensatorspannung und der zusätzlichen netzfrequenten Balancierungsspannung mit wählbarer Amplitude zusammensetzt.

Die zur Bildung der Balancierungsspannungen erforderliche Referenzgröße wird bei dem erfindungsgemäßen Verfahren in vorteilhafter Weise in Abhängigkeit von der Größe der Zwischenkreisspannungen erzeugt. So wird es als vorteilhaft erachtet, wenn die Referenzgröße bei Mehrquadrantenstellern mit annähernd gleichgroßen Zwischenkreisspannungen aus dem arithmetischen Mittelwert der Zwischenkreisspannungen gebildet wird.

Als vorteilhaft wird angesehen, wenn bei Mehrquadrantenstellern mit unterschiedlich großen Zwischenkreisspannungen und unterschiedlich großen Kompensatorteilspannungen die einzelnen Zwischenkreisspannungen hinsichtlich ihrer Amplitude in Bezug zu ihrer Sollamplitude unter Bildung von abgeleiteten Zwischenkreisspannungen gesetzt werden und aus den abgeleiteten Zwischenkreisspannungen durch arithmetische Mittelung die Referenzgröße gebildet wird. In vorteilhafter Weise werden die abgeleiteten Zwischenkreisspannungen gebildet, indem die jeweils gemessene Zwischenkreisspannung durch ihren Sollwert dividiert wird.

Erfindungsgemäß werden die Komponenten von doppelter Netzfrequenz in den Zwischenkreisspannungen $u_{d1}$ bis $u_{dn}$ mittels Filtern 9a bis 9n unterdrückt werden.

Der Erfindung liegt ferner die Aufgabe zugrunde, einen selbstgeführten Multilevel-Blindstromkompensator so auszugestalten, dass er auf relativ einfache und zuverlässige Weise stabil an einem Netz betrieben werden kann.

Die Lösung dieser Aufgabe besteht in einem selbstgeführten Multilevel-Blindstromkompensator mit den Merkmalen des Patentanspruchs 5. Demnach ist ein Multilevel-Blindstromkompensator mit mehreren in Reihe geschalteten Mehrquadrantenstellern angegeben, bei dem an die Zwischenkreiskondensatoren mit jeweils einem Eingang ein Balancierungsblock angeschlossen ist, der an einem weiteren Eingang mit dem Blindstrom beaufschlagt ist und mit einer mittels eines Referenzgrößenerzeugers erzeugten Referenzgröße für jeden Mehrquadrantensteller eine netzfrequente Balancierungsspannung mit wählbarer Amplitude derart erzeugt, dass die Summe aller Balancierungsspannungen null ist und jede Balancierungsspannung in Phase oder Gegenphase zur Grundschwingung des Blindstromes liegt, abhängig davon, ob die gemessene Zwischenkreisspannung des Mehrquadrantenstellers kleiner oder größer ist als eine mittels des Referenzgrößenerzeugers gebildete Referenzgröße ist, bei dem ferner der Balancierungsblock eine der Anzahl der Mehrquadrantensteller entsprechende Anzahl von Ausgängen mit den netzfrequenten Balancierungsspannungen aufweist und bei dem die Ausgänge des Balancierungsblocks an einen Summierer angeschlossen sind, der außerdem mit einer Führungsgröße der Kompensatorspannung beaufschlagt ist und der ausgangsseitig mit Eingängen eines den Mehrquadrantenstellern zugeordneten Pulsweitenmodulators verbunden ist. Auch hier werden unter Mehrquadrantenstellern sowohl Vierquadranten- als auch Zweiquadrantensteller verstanden.

Der erfindungsgemäße selbstgeführte Multilevel-Blindstromkompensator hat die vorteilhafte Eigenschaft, dass er wegen der Verwendung von Balancierungsspannungen dauerhaft stabil an einem Energieversorgungsnetz betrieben werden kann, weil bei ihm die Zwischenkreisspannungen balanciert sind und somit nicht nach oben und unten wegdriften können.

Bei einer vorteilhaften Ausführungsform des erfindungsgemäßen Blindstromkompensators sind die Mehrquadrantensteller Vierquadrantensteller, und es hat jeder Vierquadrantenstellern eine pulsweitenmodulierte Spannung aufzubringen, die sich aus einem gleichen Teil der Kompensatorspannung und einer zusätzlichen netzfrequenten Balancierungsspannung zusammensetzt.

Bei einer anderen vorteilhaften Ausgestaltung sind die Mehrquadrantensteller Vierquadrantensteller) und jeder Vierquadrantensteller eine pulsweitenmodulierte Spannung aufzubringen hat, die sich aus einem gleichen Teil der Kompensatorspannung und zusätzlichen netzfrequenten Balancierungsspannungen zusammensetzt.

Der Referenzgrößenerzeuger kann unterschiedlich ausgebildet sein. Als vorteilhaft wird es angesehen, wenn der Referenzgrößenerzeuger bei Mehrquadrantenstellern mit annähernd gleichgroßen Zwischenkreisspannungen ein Mittelwertbildner ist, der aus dem arithmetischen Mittelwert der Zwischenkreisspannungen die Referenzgröße bildet.

Bei Mehrquadrantenstellern mit unterschiedlich großen Zwischenkreisspannungen und unterschiedlich großen Kompensatorteilspannungen setzt der Referenzgrößenerzeuger die einzelnen Zwischenkreisspannungen hinsichtlich ihrer Amplitude in Bezug zu ihrer Sollamplitude - vorteilhaft durch Division - unter Bildung von abgeleiteten Zwischenkreisspannungen und bildet aus den abgeleiteten Zwischenkreisspannungen durch arithmetische Mittelung die Referenzgröße.

Um die Balancierung der Zwischenkreisspannungen besonders gut zu erreichen, ist dem Referenzgrößenerzeuger ein Filter vorgeordnet, das die Komponenten von doppelter Netzfrequenz in den Zwischenkreisspannungen unterdrückt.

Der Balancierungsblock kann bei dem erfindungsgemäßen Blindleistungskompensator in unterschiedlicher Weise ausgebildet sein. Vorteilhaft ist es, wenn der Balancierungsblock für jeden Mehrquadrantensteller eine Anordnung zur Phasenwinkelbestimmung enthält, die eingangsseitig einerseits mit dem Ausgang der Filter des jeweiligen Mehrquadrantenstellers verbunden und andererseits mit der Referenzgröße und der Netzfrequenz beaufschlagt ist; jeder Anordnung zur Phasenwinkelbestimmung ist ein Funktionsgenerator nachgeordnet, der eingangsseitig auch mit einem Amplitudendefinierer verbunden ist und ausgangsseitig die jeweilige Balancierungsspannung abgibt.

Zur weiteren Erläuterung der Erfindung ist in

Figur 1      in Form eines Blockschaltbildes ein Ausführungsbeispiel des erfindungsgemäßen Blindstromkompensators mit Vierquadrantenstellen für eine Phase eines mehrphasigen Energieversorgungssnetzes, in

Figur 1A      ein Ausführungsbeispiel eines Vierquadrantenstellers gemäß Figur 1, in

Figur 2      ein Zeigerdiagramm zur Veranschaulichung der Phasenlage der am Blindstromkompensator gemäß Figur 1 anliegenden Strom- und Spannungsgrößen, in

Figur 3      ein Ausführungsbeispiel des Balancierungsblocks gemäß Figur 1, in

Figur 4      als Blockschaltbild ein weiteres Ausführungsbeispiel des erfindungsgemäßen Blindstromkompensators mit Zweiquadrantenstellern wiederum für eine Phase eines mehrphasigen Energieversorgungsnetzes, in

Figur 4A      eine Ausführungsform für eine Art der Zweiquadrantensteller gemäß Figur 4 und in

Figur 4B      ein Ausführungsbeispiel einer weiteren Art der Zweiquadrantensteller gemäß Figur 4

dargestellt.

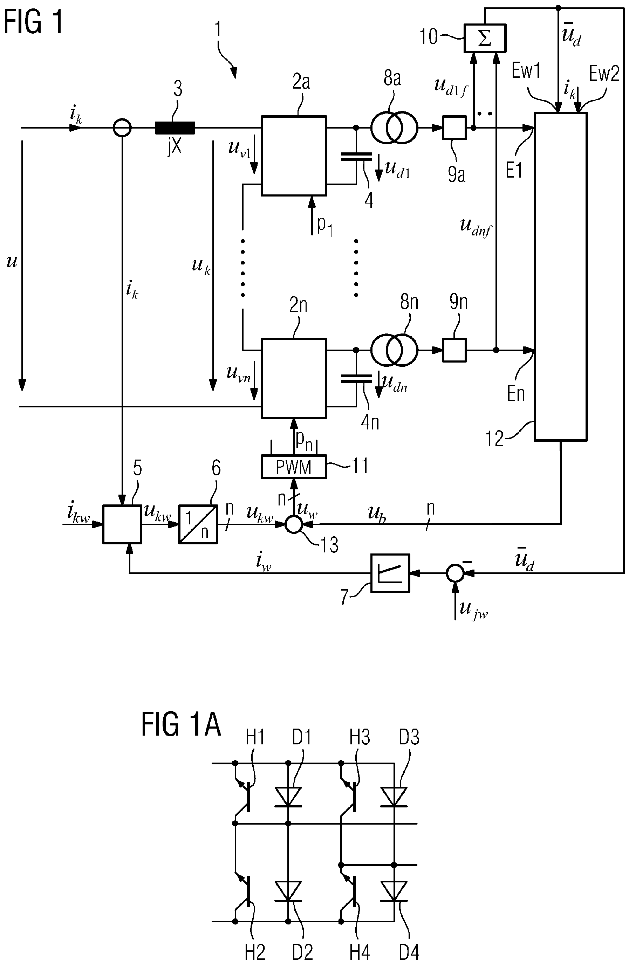

Die Figur 1 zeigt einen selbstgeführten, einphasigen Multilevel-Blindstromkompensator 1 mit n in Reihe geschalteten, gleichen Mehrquadrantenstellern in Form von Vierquadrantenstellern 2a bis 2n, die häufig auch als H-Brücken, Voltage Source Inverter (VSI) oder spannungseinprägende Umrichter bezeichnet werden. Die Vierquadrantensteller 2a bis 2n sind über eine Induktivität 3 mit einer speisenden Netzspannung u einer Phase eines ansonsten nicht gezeigten mehrphasigen elektrischen Energieversorgungsnetzes verbunden. Zwischenkreiskondensatoren 4a bis 4n der Vierquadrantensteller 2a bis 2n liefern Gleichspannungen $u_{d1}$ bis $u_{dn}$, welche möglichst gleich groß sein sollten. Jeder Vierquadrantensteller 2a bis 2n bringt einen n-ten Teil der Kompensatorspannung $u_k$ auf, über die der Blind- bzw. Kompensatorstrom $i_k$ eingestellt wird:

$$i_k = (\omega / X) \int (u - u_k) dt$$

Bei dem in Figur 1 dargestellten Multilevel-Blindstromkompensator 1 berechnet ein Kompensatorstromregler 5 eine Führungsgröße $u_{kw}$ der Kompensatorspannung $u_k$. Sie wird in einem Vektorbildner 6 durch n dividiert und bildet die n Komponenten der Führungsgröße $u_{kw}$.

Auf den Kompensatorstromregler 5 wird zusätzlich noch das Ausgangssignal $i_w$ eines Gleichspannungsreglers 7 aufgeschaltet. Dieser beeinflusst die Wirkleistungsaufnahme des Blindstromkompensators 1 und regelt damit den Mittelwert $\overline{u}_d$ der Zwischenkreisspannungen $u_{d1}$ bis $u_{dn}$ an den Zwischenkreiskondensatoren 4a bis 4n. Die Zwischenkreisspannungen $u_{d1}$ bis $u_{dn}$ werden mittels Spannungswandlern 8a bis 8n erfasst und in Filtern 9a bis 9n gefiltert, wobei insbesondere die Anteile mit doppelter Netzfrequenz eliminiert werden. Ein den Filtern 9a bis 9n nachgeordneter Mittelwertbildner 10 bestimmt aus den gefilterten Zwischenkreisspannungen $u_{d1}$ bis $u_{dn}$ eine Referenzgröße in Form des Mittelwertes $\overline{u}_d$.

Den Filtern 9a bis 9n ist ein Belancierungsblock 12 nachgeordnet (Eingänge E1 bis En), der an weiteren Eingängen Ew1 und Ew2 mit dem Mittelwert bzw. der Referenzgröße $\overline{u}_d$ und dem Blindstrom $i_k$ beaufschlagt ist. Der Balancierungsblock 12 erzeugt für jeden Vierquadrantensteller 2a bis 2n zusätzliche, netzfrequente Balancierungsspannungen $\mathbf{u}_b$, die in einem Addierer 13 zu den Führungsgrößen $\mathbf{u}_{kw}$ hinzuaddiert werden. Die so gebildeten Summenspannungen $u_w$ werden schließlich durch einen Pulsweitenmodulator 11 in Schaltimpulse zur Steuerung von Halbleitern umgewandelt, die in jedem Vierquadrantensteller 2a bis 2n vorhanden sind. Figur 1A zeigt den Aufbau der Vierquadrantensteller 2a bis 2n mit jeweils Halbleiterschaltern H1 bis H4 und Freilaufdioden D1 bis D4 in Sperrpolung.

Der Balancierblock 12 sorgt für einen Spannungsausgleich unter den Zwischenkreiskondensatoren 2a bis 2n. Dadurch bleiben die Zwischenkreisspannungen $u_{d1}$ bis $u_{dn}$ im Kompensatorbetrieb auf näherungsweise gleichem Potenzial.

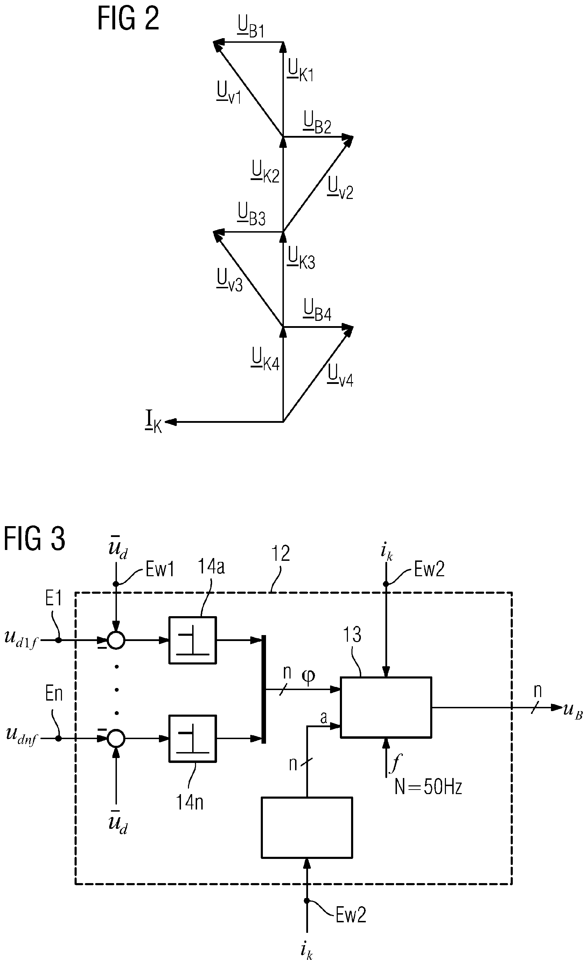

Die Vorgehensweise bei der Balancierung der Zwischenkreisspannungen $u_{d1}$ bis $u_{dn}$ soll nun anhand von Figur 2 näher erläutert werden. Die Betrachtungen gehen dabei von einem verlustlosen Blindstromkompensator mit vier Vierquadrantenstellern 2a bis 2d aus. Um den kapazitiven Blindstrom $i_k$ einzuprägen, ist die Kompensatorspannung $u_k$ notwendig. Diese ist zu gleichen Teilen von allen vier Vierquadrantenstellern 2a bis 2d aufzubringen.

Die Zwischenkreisspannungen $u_{d1}$ bis $u_{d4}$ der vier Vierquadrantensteller 2a bis 2d werden mit der Referenzgröße, vorzugsweise dem arithmetischen Mittelwert $\overline{u}_d$ aller Zwischenkreisspannungen $u_{d1}$ bis $u_{d4}$ verglichen. Dabei seien die Zwischenkreisspannungen der Vierquadrantensteller 2a und 2c $u_{d1}$ und $u_{d3}$ kleiner und die Zwischenkreisspannungen $u_{d2}$ und $u_{d4}$ der Vierquadrantensteller 2b und 2d größer als die Referenzgröße $\overline{u}_d$. Um zu einem Spannungsausgleich zu gelangen, müssen die Vierquadrantensteller 2a und 2c Wirkleistung aufnehmen und die Vierquadrantensteller 2b und 2d Wirkleistung abgeben. Dies wird durch die Aufschaltung der Balancierungsspannungen $u_{B1}$ bis $u_{B4}$ erreicht.

Die entsprechenden Spannungszeiger $\underline{U}_{B1}$ und $\underline{U}_{B3}$ verlaufen parallel zum Blindstrom $i_k$, während die Spannungszeiger $\underline{U}_{B2}$ und $\underline{U}_{B4}$ entgegengesetzt zum Blindstrom $i_k$ gerichtet sind. Die Balancierungsspannungen $\underline{U}_{B1}$ bis $\underline{U}_{B4}$ verdrehen somit die einzuprägenden Brückenspannungen der Vierquadrantensteller 2a bis 2d in mathematisch positiver Richtung ($u_{v1}$ und $u_{v3}$), wenn die Zwischenkreisspannungen $u_{d1}$ und $u_{d3}$ zu klein sind und in mathematisch negativer Richtung ($u_{v2}$ und $u_{v4}$), wenn die Zwischenkreisspannungen $u_{d2}$ und $u_{d4}$ zu groß sind. Damit der Blindstrom $i_k$ durch die Balancierungsmaßnahmen nicht beeinflusst wird, muss für die Summe aller Balancierungsspannungen $u_{B1}$ bis $u_{B4}$ stets gelten:

$$u_{B1} + u_{B2} + u_{B3} + u_{B4} = 0$$

Figur 3 vermittelt einen Einblick in den inneren Aufbau des Balancierungsblockes 12. Er besteht prinzipiell aus n Funktionsgeneratoren 13, die sinusförmige Spannungen mit Netzfrequenz 50 Hz liefern. Jedem Funktionsgenerator 13 ist eine Anordnung zur Phasenwinkelbestimmung 14a bis 14n vorgeordnet. Die Phasenwinkel werden in Bezug zum Blindstrom $i_k$ gemessen und können nur die Werte $\varphi = 0°$ oder $\varphi = 180°$ annehmen. Daher genügen als Anordnungen zur Phasenwinkelbestimmung n Zweipunktregler, um aus dem Vergleich der gemessenen und gefilterten Kondensatorspannungen $u_{d1f}$ bis $u_{dnf}$ mit der Referenzgröße $\overline{u}_d$ den Phasenwinkel $\varphi$ zu bestimmen. Natürlich kann der Phasenwinkel auch in Bezug zur Netzspannung u bestimmt werden. Die beiden möglichen Phasenwinkel betragen dann $\varphi = \pm90°$. Die entsprechenden Vektoren $\varphi$ werden den Funktionsgeneratoren 13 zugeführt.

Bei der Definition des Amplitudenvektors a im Amplitudendefinierer 15 hat der Anwender mehr Freiheitsgrade als bei der Vorgabe des Phasenwinkels. Die Einzelamplituden sind nicht von vornherein festgelegt. Sehr große Amplitudenwerte erhöhen die einzuprägenden Brückenspannungen $u_{v1}$ bis $u_{vn}$ der Vierquadrantensteller 2a bis 2n, während sehr kleine Amplitudenwerte sich negativ auf die Dynamik des Balancierungsvorganges auswirken. In der Praxis wird man daher durch Versuche herausfinden, welche Amplitudenwerte sich als geeignet erweisen. Dabei müssen die Balancierungsspannungen $u_b$ nicht wie in Figur 2 gleiche Amplituden aufweisen. Dies ist auch gar nicht möglich, wenn der Blindstromkompensator mit einer ungeraden Zahl n an gleichen Vierquadrantenstellern 2a bis 2n ausgestattet ist. Ebenso brauchen die Amplituden der Balancierungsspannungen $u_b$ nicht konstant zu sein. Es ist denkbar, sie an die Amplitude des geforderten Blindstromes $i_k$ zu koppeln und über Regler einzustellen.

Die bisherigen Betrachtungen gingen von Vierquadrantenstellern mit gleichen Zwischenkreisspannun-

gen $u_{d1}$ bis $u_{dn}$ aus. Das beschriebene Balancierungsverfahren ist aber auch bei Vierquadrantenstellern mit unterschiedlichen Zwischenkreisspannungen anwendbar. Änderungen ergeben sich lediglich bei der Bestim- mung der Referenzgröße $\bar{u}_d$, für die nun nicht mehr der arithmetische Mittelwert aller Zwischenkreisspannungen angesetzt werden kann. Vor der Mittelwertbildung sind die einzelnen Zwischenkreisspannungen durch Division auf ihre Sollamplituden zu beziehen.

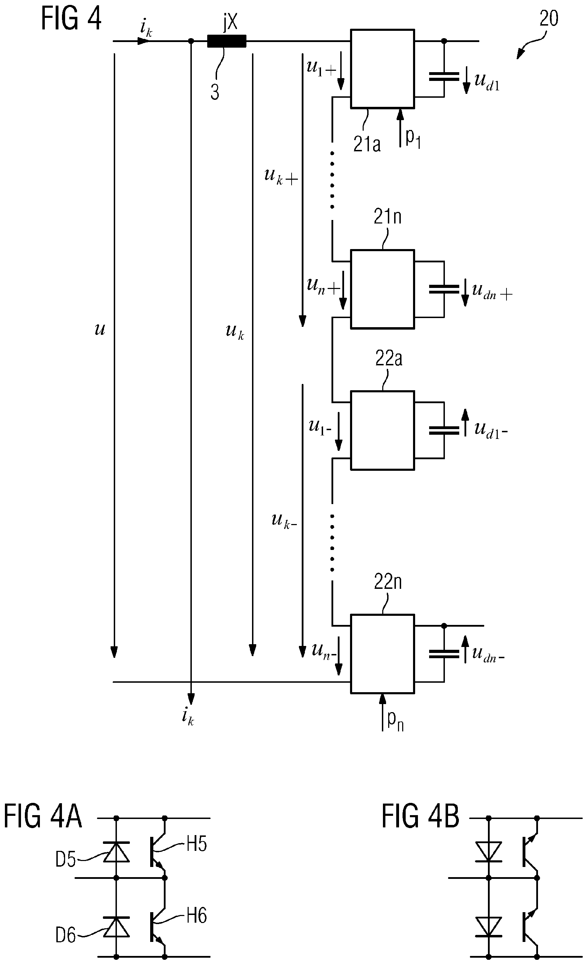

Das beschriebene Balancierungsverfahren kann auch angewendet werden, wenn entsprechend Figur 4 ein Blindstromkompensator 20 anstelle der n Vierquadrantensteller gemäß Figur 1 mit Zweiquadrantenstellern 21a bis 21n sowie 22a bis 22n ausgestattet ist. Dabei sind die Zweiquadrantensteller 21a bis 21n so ausgebildet, wie es in der Figur 4a dargestellt ist. Jeder dieser Zweiquadrantensteller besitzt Halbleiterschalter H5 und H6 mit jeweils einer parallelen Diode D5 und D6 in Sperrrichtung. Ähnlich, jedoch mit entgegengesetzter Polung sind Halbleiterschalter H7 und H8 und Dioden D7 und D8 bei den Zweiquadrantenstellern 22a bis 22n angeordnet, wie Figur 4B zeigt.

Im Übrigen ist der Blindstromkompensator 20 ähnlich dem Kompensator 1 nach Figur 1 dargestellt, in- dem seine Zwischenkreisspannungen $u_{d1+}$ bis $u_{dn-}$ eben- falls über in Figur 4 nicht gezeigte Messwandler und Filter an einen Balancierungsblock ähnlich dem nach Figur 1 angeschlossen sind, der Balancierungsspannungen einem Summierer entsprechend dem Summierer 13 nach Figur 1 zuführt. Auch ein Kompensatorstromregler und ein Gleichstromregler -wie in Figur 1 gezeigt - sind vorhanden. Da ein Zweiquadrantensteller nur Spannungen einer Polarität einprägen kann, sind 2n Einheiten 21a bis 21n und 22a bis 22n notwendig.

**Patentansprüche**

1. Verfahren zum Balancieren von Zwischenkreis- spannungen ($u_{d1}$ bis $u_{dn}$) in einem selbstgeführten Multilevel-Blindstromkompensator (1) mit mehreren in Reihe geschalteten Mehrquadrantenstellern (2a bis 2n), bei dem jeder Mehrquadrantensteller (2a bis 2n) eine pulsweitenmodulierte Spannung aufzubringen hat, die sich aus einem gleichen Teil ($u_{v1}$ bis $u_{vn}$) einer den Blindstrom ($i_k$) einprägenden Kom- pensatorspannung ($u_k$) und einer zusätzlichen netz- frequenten Balancierungsspannung ($u_b$) mit wählbarer Amplitude zusammensetzt, wobei mittels eines Referenzgrößenerzeugers eine Referenzgröße erzeugt wird und die Balancierungsspannungen mittels eines dazu vorgesehenen Balancierungsblocks unter Verwendung der Referenzgröße für jeden Mehrquadrantensteller erzeugt werden, wobei die Balancierungsspannungen an Ausgängen des Balancierungsblocks bereitgestellt werden, deren Anzahl der Anzahl der Mehrquadrantensteller entspricht, wobei die an den Ausgängen des Balancierungsblocks be- reitgestellten Balancierungsspannungen mittels ei- nes Summierers jeweils mit dem gleichen Teil ($u_{v1}$ bis $u_{vn}$) der Kompensatorspannung summiert wer- den, um Summenspannungen zur Ansteuerung der Mehrquadrantensteller zu erhalten, wobei

- die Summe aller Balancierungsspannungen ($u_b$) null ist und
- jede Balancierungsspannung ($u_b$) in Phase oder Gegenphase zu einer Grundschwingung des Blindstromes ($i_k$) liegt, abhängig davon, ob die gemessene Zwischenkreisspannung ($u_{d1}$) bis ($u_{dn}$) des Mehrquadrantenstellers (2a bis 2n) kleiner oder größer ist als die aus den Zwischen- kreisspannungen ($u_{d1}$) bis ($u_{dn}$) gebildete Refe- renzgröße ($\bar{u}_d$), wobei

Komponenten von doppelter Netzfrequenz in den Zwischenkreisspannungen ($u_{d1}$ bis $u_{dn}$) mittels Filtern (9a bis 9n) unterdrückt werden, wobei der Referenzgrößenerzeuger den Filtern nachgeordnet ist und die Referenzgröße aus den gefilterten Zwischenkreisspannungen bestimmt.

2. Verfahren nach Anspruch 1, **dadurch gekennzeichnet, dass** als Mehrquadrantensteller Vierquadrantensteller (2a bis 2n) verwendet werden und jeder Vierquadrantensteller (2a bis 2n) eine pulsweitenmodulierte Spannung aufzubringen hat, die sich aus einem gleichen Teil ($u_{v1}$ bis $u_{vn}$) der Kompensatorspannung ($u_k$) und der zusätz- lichen netzfrequenten Balancierungsspannung ($u_b$) mit wählbarer Amplitude zusammensetzt.

3. Verfahren nach Anspruch 1, **dadurch gekennzeichnet, dass** als Mehrquadrantensteller Zweiquadrantensteller (21a bis 21n; 22a bis 22n) verwendet werden und n-Zweiquadratensteller (21a bis 21n) so eingesetzt sind, dass sie po- sitive Zwischenkreisspannungen ($u_{d1+}$) bis ($u_{dn+}$) lie- fern, und n weitere Zweiquadratensteller (22a bis 22n) so eingesetzt sind, dass sie negative Zwischen- kreisspannungen ($u_{d1-}$) bis ($u_{dn-}$) liefern.

4. Verfahren nach einem der vorangehenden Ansprüche, **dadurch gekennzeichnet, dass** die Referenzgrö- ße ($\bar{u}_d$) bei Mehrquadrantenstellern (2a bis 2n) mit annähernd gleichgroßen Zwischenkreisspannun- gen ($u_{d1}$) bis ($u_{dn}$) aus dem arithmetischen Mittelwert der Zwischenkreisspannungen ($u_{d1}$) bis ($u_{dn}$) gebil- det wird.

**5.** Selbstgeführter Multilevel-Blindstromkompensator mit mehreren in Reihe geschalteten Mehrquadrantenstellern (2a bis 2n), bei dem an die Zwischenkreiskondensatoren (4a bis 4n) mit jeweils einem Eingang (E1 bis En) ein Balancierungsblock (12) angeschlossen ist, der an einem weiteren Eingang (Ew2) mit dem Blindstrom ($i_k$) beaufschlagt ist und dazu eingerichtet ist, mit einer mittels eines Referenzgrößenerzeugers (10) erzeugten Referenzgröße ($\overline{u}_d$) für jeden Mehrquadrantensteller (2a bis 2n) eine netzfrequente Balancierungsspannung ($u_b$) mit wählbarer Amplitude derart zu erzeugen, dass die Summe aller Balancierungsspannungen ($u_b$) null ist und jede Balancierungsspannung ($u_b$) in Phase oder Gegenphase zur Grundschwingung des Blindstromes ($i_k$) liegt, abhängig davon, ob die gemessene Zwischenkreisspannung ($u_{d1}$ bis $u_{dn}$) des Mehrquadrantenstellers (2a bis 2n) kleiner oder größer als eine mittels des Referenzgrößenerzeugers (10) gebildete Referenzgröße ($u_d$) ist, bei dem der Balancierungsblock (12) eine der Anzahl der Mehrquadrantensteller (2a bis 2n) entsprechende Anzahl von Ausgängen mit den netzfrequenten Balancierungsspannungen ($u_b$) aufweist, und bei dem die Ausgänge des Balancierungsblocks (12) an einen Summierer (13) angeschlossen sind, der außerdem mit einer Führungsgröße ($u_{kw}$) einer den Blindstrom ($i_k$) einprägenden Kompensatorspannung ($u_k$) beaufschlagt ist und der ausgangsseitig mit Eingängen eines den Mehrquadrantenstellern (2a bis 2n) zugeordneten Pulsweitenmodulators (11) verbunden ist, wobei der Summierer dazu eingerichtet ist, die am Ausgang des Balancierungsblocks bereitgestellten Balancierungsspannungen jeweils mit einem gleichen Teil ($u_{v1}$ bis $u_{vn}$) der Kompensatorspannung ($u_k$) zu summieren, um Summenspannungen zur Ansteuerung der Mehrquadrantensteller zu erhalten, wobei dem Referenzgrößenerzeuger (10) ein Filter (9a bis 9b) vorgeordnet ist, das dazu eingerichtet ist, die Komponenten von doppelter Netzfrequenz in den Zwischenkreisspannungen ($u_{d1}$ bis $u_{dn}$) zu unterdrücken, wobei der Referenzgrößenerzeuger dazu eingerichtet ist, die Referenzgröße aus den gefilterten Zwischenkreisspannungen zu bestimmen.

**6.** Blindstromkompensator nach Anspruch 5, **dadurch gekennzeichnet, dass** die Mehrquadrantensteller Vierquadrantensteller (2a bis 2n) sind und jeder Vierquadrantensteller (2a bis 2n) dazu eingerichtet ist, eine pulsweitenmodulierte Spannung aufzubringen, die sich aus einem gleichen Teil ($u_{v1}$ bis $u_{vn}$) der Kompensatorspannung ($u_k$) und einer zusätzlichen netzfrequenten Balancierungsspannung

($u_b$) zusammensetzt.

**7.** Blindstromkompensator nach Anspruch 5, **dadurch gekennzeichnet, dass** die Mehrquadrantensteller Zweiquadrantensteller (21a bis 21n; 22a bis 22n) sind und n Zweiquadratensteller (21a bis 21b) dazu eingerichtet sind, so eingesetzt zu werden, dass sie positive Zwischenkreisspannungen ($u_{d1+}$ bis $u_{dn+}$) liefern, und n weitere Zweiquadratensteller (22a bis 22n) dazu eingerichtet sind, so eingesetzt zu werden, dass sie negative Zwischenkreisspannungen ($u_{d1-}$ bis $u_{dn-}$) liefern.

**8.** Blindstromkompensator nach einem der Ansprüche 5 bis 7, **dadurch gekennzeichnet, dass** der Referenzgrößenerzeuger dazu eingerichtet ist, bei Mehrquadrantenstellern (2a bis 2n) mit annähernd gleichgroßen Zwischenkreisspannungen ($u_{d1}$ bis $u_{dn}$) als ein Mittelwertbildner (10) zu arbeiten, der aus dem arithmetischen Mittelwert der Zwischenkreisspannungen ($u_{d1}$ bis $u_{dn}$) die Referenzgröße ($u_d$) bildet.

## Claims

**1.** Method for balancing intermediate circuit voltages ($u_{d1}$ to $u_{dn}$) in a self-guided multilevel reactive current compensator (1) having a plurality of series-connected multi-quadrant actuators (2a to 2n), in which each multi-quadrant actuator (2a to 2n) has to apply a pulse width-modulated voltage consisting of an identical part ($u_{v1}$ to $u_{vn}$) of a compensator voltage ($u_k$) impressed on the reactive current ($i_k$) and an additional grid-frequency balancing voltage ($u_b$) with a selectable amplitude, wherein a reference variable is generated by way of a reference variable generator and the balancing voltages are generated by way of a balancing block provided for this purpose using the reference variable for each multi-quadrant actuator, wherein the balancing voltages are provided at outputs of the balancing block, the number of which outputs corresponds to the number of multi-quadrant actuators, wherein the balancing voltages provided at the outputs of the balancing block are summed by way of a summer in each case with the identical part ($u_{v1}$ to $u_{vn}$) of the compensator voltage in order to obtain summed voltages in order to drive the multi-quadrant actuators, wherein

- the sum of all of the balancing voltages ($u_b$) is zero and
- each balancing voltage ($u_b$) is in phase or counterphase with a fundamental oscillation of the reactive current ($i_k$) depending on whether the measured intermediate circuit voltage ($u_{d1}$) to

($u_{dn}$) of the multi-quadrant actuator (2a to 2n) is less than or greater than the reference variable ($\overline{u}_d$) formed from the intermediate circuit voltages ($u_{d1}$) to ($u_{dn}$), wherein

components of double the grid frequency in the intermediate circuit voltages ($u_{d1}$ to $u_{dn}$) are suppressed by way of filters (9a to 9n), wherein the reference variable generator is arranged downstream of the filters and determines the reference variable from the filtered intermediate circuit voltages.

2. Method according to Claim 1,
**characterized in that**
four-quadrant actuators (2a to 2n) are used as multi-quadrant actuators, and each four-quadrant actuator (2a to 2n) has to apply a pulse width-modulated voltage that consists of an identical part ($u_{v1}$ to $u_{vn}$) of the compensator voltage ($u_k$) and the additional grid-frequency balancing voltage ($u_b$) with a selectable amplitude.

3. Method according to Claim 1,
**characterized in that**
two-quadrant actuators (21a to 21n; 22a to 22n) are used as multi-quadrant actuators and n two-quadrant actuators (21a to 21n) are used such that they deliver positive intermediate circuit voltages ($u_{d1+}$) to ($u_{dn+}$), and n further two-quadrant actuators (22a to 22n) are used such that they deliver negative intermediate circuit voltages ($u_{d1-}$) to ($u_{dn-}$).

4. Method according to one of the preceding claims,
**characterized in that**,
in the case of multi-quadrant actuators (2a to 2n) with approximately equal intermediate circuit voltages ($u_{d1}$) to ($u_{dn}$), the reference variable ($\overline{u}_d$) is formed from the arithmetic average of the intermediate circuit voltages ($u_{d1}$) to ($u_{dn}$).

5. Self-guided multilevel reactive current compensator having a plurality of series-connected multi-quadrant actuators (2a to 2n),
in which a balancing block (12) is connected to the intermediate circuit capacitors (4a to 4n) at a respective input (E1 to En), which balancing block has the reactive current ($i_k$) applied thereto at a further input (Ew2) and is configured so as to use a reference variable ($\overline{u}_d$) generated by way of a reference variable generator (10) to generate a grid-frequency balancing voltage ($u_b$) with a selectable amplitude for each multi-quadrant actuator (2a to 2n) such that the sum of all of the balancing voltages ($u_b$) is zero and each balancing voltage ($u_b$) is in phase or counterphase with the fundamental oscillation of the reactive current ($i_k$) depending on whether the measured intermediate circuit voltage ($u_{d1}$ to $u_{dn}$) of the multi-quadrant actuator (2a to 2n) is less than or greater than a reference variable ($\overline{u}_d$) formed by way of the reference variable generator (10), in which the balancing block (12) has a number of outputs, corresponding to the number of multi-quadrant actuators (2a to 2n), with the grid-frequency balancing voltages ($u_b$), and
in which the outputs of the balancing block (12) are connected to a summer (13) that furthermore has applied thereto a guide variable ($u_{kw}$) of a compensator voltage ($u_k$) impressed on the reactive current ($i_k$) and is connected at output to inputs of a pulse width modulator (11) assigned to the multi-quadrant actuators (2a to 2n), wherein the summer is configured so as to sum the balancing voltages provided at the output of the balancing block in each case with an identical part ($u_{v1}$ to $u_{vn}$) of the compensator voltage ($u_k$) in order to obtain summed voltages in order to drive the multi-quadrant actuators, wherein a filter (9a to 9b) is arranged upstream of the reference variable generator (10), which filter is configured so as to suppress the components of double the grid frequency in the intermediate circuit voltages ($u_{d1}$ to $u_{dn}$), wherein the reference variable generator is configured so as to determine the reference variable from the filtered intermediate circuit voltages.

6. Reactive current compensator according to Claim 5,
**characterized in that**
the multi-quadrant actuators are four-quadrant actuators (2a to 2n) and each four-quadrant actuator (2a to 2n) is configured so as to apply a pulse width-modulated voltage consisting of an identical part ($u_{v1}$ to $u_{vn}$) of the compensator voltage ($u_k$) and an additional grid-frequency balancing voltage ($u_b$).

7. Reactive current compensator according to Claim 5,
**characterized in that**
the multi-quadrant actuators are two-quadrant actuators (21a to 21n; 22a to 22n) and n two-quadrant actuators (21a to 21b) are configured so as to be used such that they deliver positive intermediate circuit voltages ($u_{d1+}$ to $u_{dn+}$), and n further two-quadrant actuators (22a to 22n) are configured so as to be used such that they deliver negative intermediate circuit voltages ($u_{d1-}$ to $u_{dn-}$).

8. Reactive current compensator according to one of Claims 5 to 7,
**characterized in that**
the reference variable generator is configured so as to operate as an averager (10) in the case of multi-quadrant actuators (2a to 2n) having approximately equal intermediate circuit voltages ($u_{d1}$ to $u_{dn}$), which averager forms the reference variable ($u_d$) from the arithmetic average of the intermediate circuit voltages ($u_{d1}$ to $u_{dn}$).

**Revendications**

1. Procédé d'équilibrage de tensions ($u_{d1}$ à $u_{dn}$) de circuit intermédiaire dans un compensateur (1) à courant réactif à plusieurs niveaux à commutation autonome, ayant plusieurs régulateurs (2a à 2n) à plusieurs quadrants montés en série, dans lequel chaque régulateur (2a à 2n) à plusieurs quadrants a à appliquer une tension modulée en largeur d'impulsion, qui se compose d'une partie ($u_{v1}$ à $u_{vn}$) continue d'une tension ($u_k$) de compensateur imprimant le courant ($i_k$) réactif et d'une tension ($u_b$) d'équilibre supplémentaire à la fréquence du réseau d'amplitude pouvant être sélectionnée, dans lequel au moyen d'un producteur de grandeur de référence, on produit une grandeur de référence et on produit les tensions d'équilibrage au moyen d'un bloc d'équilibrage prévu à cet effet, en utilisant la grandeur de référence pour chaque régulateur à plusieurs quadrants, dans lequel

on applique les tensions d'équilibrage aux sorties du bloc d'équilibrage, dont le nombre correspond au nombre des régulateurs à plusieurs quadrants, dans lequel

on somme les tensions d'équilibrage appliquées aux sorties du bloc d'équilibrage au moyen d'un sommateur, respectivement, avec la partie ($u_{v1}$ à $u_{vn}$) continue de la tension de compensateur, pour obtenir des tensions sommes, afin de commander les régulateurs à plusieurs quadrants, dans lequel

- la somme de toutes les tension ($u_b$) d'équilibrage est nulle et
- chaque tension (ub) d'équilibrage est en phase ou en opposition de phase avec une oscillation fondamentale du courant ($i_k$) réactif, en fonction du point de savoir si la tension ($u_{d1}$) à ($u_{dn}$) de circuit intermédiaire mesurée du régulateur (2a à 2n) à plusieurs quadrants est plus haute ou plus basse que la grandeur ($\overline{u}_d$) de référence, formée à partir des tensions ($u_{d1}$) à ($u_{dn}$) de circuit intermédiaire, dans lequel on supprime des composantes au double de la fréquence de réseau dans les tensions ($u_{d1}$ à $u_{dn}$) de circuit intermédiaire au moyen de filtres (9a à 9n), le producteur de grandeur de référence étant monté en aval des filtres et déterminant la grandeur de référence à partir des tensions de circuit intermédiaire filtrées.

2. Procédé suivant la revendication 1,
**caractérisé en ce que**
on utilise, comme régulateur à plusieurs quadrants, des régulateurs (2a à 2n) à quatre quadrants et chaque régulateur (2a à 2n) à quatre quadrants a à appliquer une tension modulée en largeur d'impulsion, qui se compose d'une partie ($u_{v1}$ à $u_{vn}$) continue de la tension ($u_k$) de compensateur et de la tension ($u_b$) d'équilibrage supplémentaire à la fréquence du réseau d'amplitude pouvant être sélectionnée.

3. Procédé suivant la revendication 1,
**caractérisé en ce que**
l'on utilise, comme régulateur à plusieurs quadrants, des régulateurs (21a à 21n ; 22a à 22n) à deux quadrants et n régulateurs (21a à 21n) à deux quadrants sont utilisés, de manière à donner des tensions ($u_{d1+}$) à ($u_{dn+}$) de circuit intermédiaires positives et n autres régulateurs (22a à 22n) à deux quadrants sont utilisés, de manière à donner des tensions ($u_{d1-}$) à ($u_{dn-}$) de circuit intermédiaire négatives.

4. Procédé suivant l'une des revendications précédentes,
**caractérisé en ce que**
l'on forme la grandeur ($\overline{u}_d$) de référence pour des régulateurs (2a à 2n) à plusieurs quadrants ayant des tensions ($u_{d1}$) à ($u_{dn}$) de circuit intermédiaire sensiblement pareilles à partir de la moyenne arithmétique des tensions ($u_{d1}$) à ($u_{dn}$) de circuit intermédiaire.

5. Compensateur de courant réactif à plusieurs niveaux à commutation autonome, comprenant plusieurs régulateurs (2a à 2n) à plusieurs quadrants montés en série,
dans lequel, aux condensateurs (4a à 4n) de circuit intermédiaire, ayant chacun une entrée (E1 à En), est connecté un bloc (12) d'équilibrage , qui est alimenté sur une autre entrée (Ew2) en le courant ($i_k$) réactif et qui est conçu pour produire, par une grandeur ($\overline{u}_d$) de référence produite au moyen d'un producteur (10) de grandeur de référence, pour chaque régulateur (2a à 2n) à plusieurs quadrants, une tension ($u_b$) d'équilibrage à la fréquence du réseau d'amplitude pouvant être sélectionnée, de manière à ce que la somme de toutes les tensions ($u_b$) d'équilibrage soient nulles et chaque tension ($u_b$) d'équilibrage est en phase ou en opposition de phase à l'oscillation fondamentale du courant ($i_k$) réactif, en fonction du point de savoir si la tension (ud1 à udn) de circuit intermédiaire mesurée du régulateur (2a à 2n) à plusieurs quadrants est plus basse ou plus haute qu'une grandeur ($u_d$) de référence formée au moyen du producteur (10) de grandeur de référence, dans lequel le bloc (12) d'équilibrage a un nombre, correspondant au nombre de régulateurs (2a à 2n) à plusieurs quadrants, de sorties ayant les tensions ($u_b$) d'équilibrage à la fréquence du réseau, et

dans lequel les sorties du bloc (12) d'équilibrage sont connectées à un sommateur (13), qui reçoit, en outre, une grandeur ($u_{kw}$) de référence d'une tension ($u_k$) de compensateur imprimant le courant ($i_k$) réactif et qui est connecté, du côté de la sortie, à des entrées d'un modulateur (11) en largeur d'impulsion associé aux régulateurs (2a à 2n) à plusieurs quadrants, le sommateur étant conçu pour sommer les tensions d'équilibrage appliquées à la sortie du bloc d'équilibrage, chacune avec une partie ($u_{v1}$ à $u_{vn}$) continue de la tension ($u_k$) de compensateur, afin d'obtenir des tensions sommes pour commander les régulateurs à plusieurs quadrants, dans lequel il est monté, en amont du producteur (10) de grandeur de référence, un filtre (9a à 9b) conçu pour supprimer les composantes au double de la fréquence du réseau dans les tensions ($u_{d1}$ à $u_{dn}$) de circuit intermédiaire, le producteur de grandeur de référence étant conçu pour déterminer la grandeur de référence à partir des tensions de circuit intermédiaire filtrées.

6.   Compensateur de courant réactif suivant la revendication 5, **caractérisé en ce que** les régulateurs (2a à 2n) à plusieurs quadrants sont des régulateurs à quatre quadrants et chaque régulateur (2a à 2n) à quatre quadrants est conçu pour appliquer une tension modulée en largeur d'impulsion, qui se compose d'une partie ($u_{v1}$ à $u_{vn}$) continue de la tension ($u_k$) de compensateur et d'une tension ($u_b$) d'équilibrage supplémentaire à la fréquence du réseau.

7.   Compensateur de courant réactif suivant la revendication 5, **caractérisé en ce que** les régulateurs à plusieurs quadrants sont des régulateurs (21a à 21n ; 22a à 22n) à deux quadrants et n régulateurs (21a à 21b) à deux quadrants sont conçus pour être utilisés de manière à appliquer des tensions ($u_{d1+}$ à $u_{dn+}$) de circuit intermédiaire positives et n autres régulateurs (22a à 22n) à deux quadrants sont conçus pour être utilisés de manière à fournir des tensions ($u_{d1-}$ à $u_{dn-}$) de circuit intermédiaire négatives.

8.   Compensateur de courant réactif suivant l'une des revendications 5 à 7, **caractérisé en ce que** le producteur de grandeur de référence est, pour travailler pour des régulateurs (2a à 2n) à plusieurs quadrants, ayant à peu près les mêmes tensions ($u_{d1}$ à $u_{dn}$) de circuit intermédiaire, conçu comme un formeur (10) de valeur moyenne, qui forme la grandeur ($u_d$) de référence à partir de la moyenne arithmétique des tensions ($u_{d1}$ à $u_{dn}$) de circuit intermédiaire.

FIG 1

FIG 1A

## FIG 2

$\underline{U}_{B1}$

$\underline{U}_{K1}$

$\underline{U}_{v1}$

$\underline{U}_{B2}$

$\underline{U}_{K2}$

$\underline{U}_{v2}$

$\underline{U}_{B3}$

$\underline{U}_{K3}$

$\underline{U}_{v3}$

$\underline{U}_{B4}$

$\underline{U}_{K4}$

$\underline{U}_{v4}$

$\underline{I}_{K}$

## FIG 3

$\bar{u}_d$

Ew1

14a

12

$i_k$

Ew2

E1

$u_{d1f}$

13

n

$\varphi$

n

$u_B$

En

$u_{dnf}$

a

$\bar{u}_d$

14n

n

$f$

N=50Hz

Ew2

$i_k$

FIG 4

$i_k$

jX

3

$u_{1+}$

21a

$p_1$

$u_{d1}$

20

$u_{k+}$

21n

$u_{n+}$

$u_{dn+}$

22a

$u$

$u_k$

$u_{1-}$

$u_{d1-}$

$u_{k-}$

22n

$u_{n-}$

$u_{dn-}$

$i_k$

$p_n$

FIG 4A

D5

D6

H5

H6

FIG 4B

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5642275 A

**In der Beschreibung aufgeführte Nicht-Patentliteratur**

- **SU CHEN ; GEZA JOÓS.** A Transformerless STAT-COM Based on Cascaded Multilevel Inverters with Low Switching Frequency Space Vectors PWM. *EPE,* 2001

- **FANG ZHENG PENG et al.** A Multilevel Voltage-Source Inverter with Separate DC-Sources for Static Var Generation. IEEE, 1996